# EUROPÄISCHE PATENTSCHRIFT

(11) **EP 4 228 821 B1**
(45) Veröffentlichungstag und Bekanntmachung des Hinweises auf die Patenterteilung: **13.03.2024**
(21) Anmeldenummer: 21790400.2
(22) Anmeldetag: 06.10.2021
(51) Int. Cl.: B05B 7/00

(54) **DÜSE ZUM VERSPRÜHEN VON STOFFEN UND VERFAHREN ZUR STEUERUNG ODER REGELUNG DER DÜSE**
NOZZLE FOR SPRAYING SUBSTANCES AND PROCESSES FOR CONTROLLING OR REGULATING THE NOZZLE
BUSE DE PULVÉRISATION DE SUBSTANCES ET PROCÉDÉS DE CONTRÔLE OU DE RÉGULATION DE LA BUSE

(30) Priorität: 19.10.2020 DE 102020213179
(43) Veröffentlichungstag der Anmeldung: 23.08.2023
(73) Patentinhaber: Glatt Gesellschaft mit beschränkter Haftung, 79589 Binzen (DE)
(72) Erfinder: NOWAK, Reinhard, 79540 Lörrach (DE); THIES, Jochen, 79540 Lörrach (DE)
(74) Vertreter: Patentanwälte Magenbauer & Kollegen Partnerschaft mbB
(86) Internationale Anmeldenummer: PCT/EP2021/077508
(87) Internationale Veröffentlichungsnummer: WO 2022/084034

(56) Entgegenhaltungen:
- WO-A1-2007/080084
- GB-A- 715 818
- RU-C2- 2 441 710

## Beschreibung

Die Erfindung betrifft eine Düse zum Versprühen von Stoffen, insbesondere Dispersionen, Emulsionen oder Suspensionen, umfassend einen ein Düsenmundstück und eine Längsachse aufweisenden Düsenkörper, wobei der Düsenkörper ein mit einer Zuführung für den zu versprühenden Stoff verbundenes, über einen eine Innenrohrkanal-Innenwandung, einen eine Innenrohrkanal-Querschnittsfläche aufweisenden Innenrohrkanal-Querschnitt umfassenden Innenrohrkanal und eine eine Innenrohr-Austrittsöffnungsfläche aufweisende Innenrohr-Austrittsöffnung verfügendes Innenrohr und ein das Innenrohr mit radialem Abstand umschließendes und mit einer Zuführung für ein Gas verbundenes eine eine Außenrohr-Austrittsöffnungsfläche aufweisende Außenrohr-Austrittsöffnung umfassendes Außenrohr aufweist und die Innenrohr-Austrittsöffnung und die Außenrohr-Austrittsöffnung im Bereich des Düsenmundstückes angeordnet sind, wobei in dem den zu versprühenden Stoff führenden Innenrohrkanal in einem Abstand zur Innenrohr-AustrittsÖffnung eine Engstelle angeordnet ist, wobei in der Engstelle die Innenrohrkanal-Querschnittsfläche kleiner ist als die Innenrohrkanal-Querschnittsfläche eines Innenrohrkanalaustrittsabschnitts zwischen der Engstelle und der Innenrohr-Austrittsöffnung, wobei die Engstelle aus einem flexiblen Material ausgebildet ist.

Des Weiteren betrifft die Erfindung ein Verfahren zur Steuerung oder Regelung des Volumenstroms eines zu versprühenden Stoffes und/oder eines Gases einer zum Versprühen von Stoffen, insbesondere Dispersionen, Emulsionen oder Suspensionen, geeigneten Düse, wobei die Düse einen ein Düsenmundstück und eine Längsachse aufweisenden Düsenkörper umfasst, wobei der Düsenkörper ein mit einer Zuführung für den zu versprühenden Stoff verbundenes, über einen eine Innenrohrkanal-Innenwandung, einen eine Innenrohrkanal-Querschnittsfläche aufweisenden Innenrohrkanal-Querschnitt umfassenden Innenrohrkanal und eine eine Innenrohr-Austrittsöffnungsfläche aufweisende Innenrohr-Austrittsöffnung verfügendes Innenrohr und ein das Innenrohr mit radialem Abstand umschließendes und mit einer Zuführung für ein Gas verbundenes eine eine Außenrohr-Austrittsöffnungsfläche aufweisende Außenrohr-Austrittsöffnung umfassendes Außenrohr aufweist und die Innenrohr-Austrittsöffnung und die Außenrohr-Austrittsöffnung im Bereich des Düsenmundstückes angeordnet sind.

In industriellen Prozessen, wie beispielsweise der Granulation, dem Coating von Tabletten und Pellets sowie der direkten Herstellung von Pellets, kommen sehr häufig Düsen bzw. Sprühdüsen zum Einsatz. Hierbei werden die Partikel mit einer Schicht und/oder einem Film überzogen. In der Regel werden Flüssigkeiten, in denen Feststoffe gelöst oder suspendiert sind, versprüht. Diese Sprühprozesse können mehrere Stunden dauern. Durch die Zerstäubung wird der Flüssigkeitsstrahl in kleine Tröpfchen zerstäubt. Die hierbei entstehende Tröpfchengröße ist von essenzieller Bedeutung für den Herstellungs- und/oder Sprühprozess. Sind die Tröpfchen zu klein, besteht die Gefahr, dass sie trocknen bevor sie ihr Ziel erreichen, sind die Tröpfchen zu groß, besteht die Gefahr, dass unerwünschte Agglomerate entstehen. Durch die prozessbedingten Wirbel vor der Düse kann es - insbesondere bei langanhaltenden Sprühprozessen - zu Ablagerungen an der Düsenöffnung, also einer sog. "Bartbildung", kommen. Diese Ablagerungen beeinflussen die Symmetrie und die Tröpfchengröße des Sprays, sodass es zu nicht erwünschten Prozessauswirkungen wie beispielsweise der Sprühtrocknung und/oder lokalen Überfeuchtung und Agglomeration, kommt.

Der nachstehende Stand der Technik stellt technische Lösungen dar, die unerwünschten Ablagerungen an der Düse, insbesondere am Düsenmundstück, verhindern oder zumindest minimieren.

Die europäische Patentschrift EP 1 497 034 B1 zeigt eine selbstreinigende Sprühdüse und insbesondere eine selbstreinigende Düse zur Verwendung in einer Vorrichtung für die Zubereitung eines Partikelmaterials durch ein kontrolliertes Agglomerationsverfahren. Die selbstreinigende Sprühdüse weist ein mittleres Rohr, das einen mittigen Durchlass zum Zuführen einer Flüssigkeit aufweist, wobei der Durchlass in einer Öffnung zum Ausgeben der Flüssigkeit mündet, ein das mittlere Rohr umgebendes zweites Rohr, wodurch ein erster Durchlass zwischen dem mittleren Rohr und dem zweiten Rohr zum Zuführen von primär Luft gebildet ist, einen Düsenkegel, der am Ende des zweiten Rohres angeordnet ist und den Außenumfang eines ersten Auslassspalts des ersten Durchlasses bildet, wodurch durch dem ersten Durchlass zugeführte Luft mit der Flüssigkeit vermischt wird, um einen Flüssigkeit/Luft-Sprühnebel zu bilden, ein das zweite Rohr umgebendes drittes Rohr, wodurch ein zweiter Durchlass zwischen dem zweiten und dem dritten Rohr zum Zuführen von Sekundärluft gebildet ist, eine am Ende des dritten Rohres angeordnete Hülse, welche den Außenumfang eines zweiten Auslassspalts des zweiten Durchlasses bildet, aufweist, wobei der Düsenkegel zum Einstellen der Größe des ersten Auslassspalts verstellbar am Ende des zweiten Rohres angeordnet ist.

In der internationalen Patentanmeldung WO 2013/010930 A1 wird eine Selbstreinigungsdüse zum Versprühen eines Fluids mit einem Düsengehäuse und einem darin angeordneten, mehrteilig ausgebildeten Düsenkopf beschrieben, welcher einen Strömungskanal mit einer Austrittsöffnung für das Fluid einschließt, wobei der Düsenkopf zumindest ein feststehendes und wenigstens ein verschiebbar gelagertes Kopfelement besitzt, welche jeweils einen Abschnitt der Austrittsöffnung bilden, wobei das verschiebbare Kopfelement während des Normalbetriebs vom Fluiddruck gegen einen in Strömungsrichtung des Fluids liegenden Anschlag und während der Selbstreinigung bei vermindertem Fluiddruck von einer Feder entgegen der Strömungsrichtung gedrückt wird.

Die Offenlegungsschrift DE 43 24 731 A1 zeigt eine selbstreinigende Sprühdüse zum Versprühen eines Fluids aus einer Druckmittelquelle, wobei ein rohrförmiges Fitting vorgesehen ist, welches einen in seiner Längsrichtung verlaufenden inneren Fluidkanal aufweist, welches mit einem Einlass und mit einem Auslass versehen ist und welches mit Verbindungseinrichtungen zum Herstellen einer Verbindung mit der Druckmittelquelle versehen ist; ein rohrförmiger Schaft mit einem Einlass und einem Auslass vorgesehen ist, durch den das Fluid hindurchgeleitet werden kann, wobei der Einlass des Schaftes teilweise in das auslassseitige Ende des Fittings hineinreicht, derart, dass das in das Fitting eintretende Fluid in Längsrichtung durch den Schaft strömt, welcher mit einem Flansch versehen ist; ein Ventilsitz mit einer Schürze vorgesehen ist, welche eine Innenfläche aufweist, die derart dimensioniert ist, dass sie gleitverschieblich um den Schaft passt und welche eine Außenfläche aufweist, die so dimensioniert ist, dass sie in den Auslass des rohrförmigen Fittings passt, um die radiale Position des Ventilsitzes zu fixieren, wobei der Ventilsitz außerdem eine Lippe aufweist, die so dimensioniert ist, dass sie den Ventilsitz in Längsrichtung am Auslass des rohrförmigen Fittings positioniert und zwischen dem Ventilsitz und dem Auslass des rohrförmigen Fittings eine Dichtung bildet; Einrichtungen vorgesehen sind, durch die der Ventilsitz zwangsläufig in Kontakt mit dem Fitting gehalten wird, um eine Verlagerung des Ventilsitzes in Längsrichtung und in radialer Richtung zu verhindern; ein Sprühkopf mit Befestigungseinrichtungen zum Befestigen des rohrförmigen Schaftes vorgesehen ist, wobei der Sprühkopf Auslasseinrichtungen umfasst und eine an den Ventilsitz angepasste Oberfläche besitzt; eine Feder vorgesehen ist, welche den Schaft umgibt und gegen den Flansch des Schaftes vorgespannt ist, um eine fest vorgegebene Vorspannkraft gegen den Ventilsitz zu erzeugen, wobei die Feder den Ventilsitz gegen die angepasste Oberfläche des Sprühkopfes drückt, sodass zwischen dem Ventilsitz und der angepassten Oberfläche des Ventilkopfes eine Dichtung gebildet wird, um die Fluidströmung an dieser Dichtung zu beschränken und wobei die Auslasseinrichtungen einen solchen Kanal für die Fluidströmung bilden, dass diese, wenn die Dichtung hergestellt ist, gemäß einem vorgegebenen Muster dispergiert bzw. versprüht wird; wobei eine auf den Sprühkopf ausgeübte Kraft, die ausreicht, um die Federvorspannung zu überwinden, den Sprühkopf von dem Ventilsitz trennt, wodurch die Dichtwirkung aufgehoben und ein Spülen der Auslasseinrichtungen durch das Fluid ermöglicht wird.

Die Patentschrift DE 101 16 051 B4 offenbart eine Sprühdüse für Wirbelschichtanlagen, bestehend aus einem Düsenkörper, einer Düsenkappe, mindestens einer Austrittsöffnung für eine mit Feststoffen beaufschlagte Flüssigkeit und aus mindestens einer Austrittsöffnung für ein Gas, wobei um die Düsenkappe eine flexible Reinigungskappe angeordnet ist und zwischen der Düsenkappe und der Reinigungskappe eine aus einem in dem Düsenkörper angeordneten Druckluftkanal bestehende Zuführung für eine druckluftbeaufschlagte Reinigungsluft angeordnet ist, wobei der Druckluftkanal über eine ringförmige Eindrehung in der Außenfläche des Düsenkörpers und mindestens eine Querbohrung in der Düsenkappe mit einer ringförmigen Eindrehung in der Außenfläche der Düsenkappe verbunden ist. Die Reinigungskappe liegt direkt eng an der Düsenkappe an. Über den Druckluftkanal erfolgt in einstellbaren unterschiedlichen Intervallen oder über einen größeren Zeitraum die Zuführung von druckluftbeaufschlagter Reinigungsluft. Die Reinigungsluft wird über die ringförmige Eindrehung und der Querbohrung der ringförmigen Eindrehung zugeführt. Über die ringförmige Eindrehung wird die Reinigungsluft über den gesamten Umfang zwischen der Düsenkappe und der Reinigungskappe zugeführt. Durch den Druckstoß der Reinigungsluft wölbt sich die aus elastischem Material bestehende Reinigungskappe nach außen, sodass die Reinigungsluft zwischen der Außenfläche der Düsenkappe und der Innenfläche der Reinigungskappe in Richtung der Austrittsöffnung der Sprühdüse geleitet wird. Die Reinigungsluft wird als Druckstrahl ringförmig von allen Seiten an den Düsenmund der Sprühdüse geleitet, sodass der Impuls des Strahles ohne Verluste direkt genutzt werden kann und Verwirbelungen vermieden werden. Entstehende Materialablagerungen im unmittelbaren Bereich der Austrittsöffnung in der Sprühdüse werden durch die Reinigungsluft weggeblasen.

Nachteilig an den vorgenannten technischen Lösungen ist es, dass diese im Stand der Technik genannten selbstreinigenden Düsen jeweils eine große Anzahl an Einzelteilen aufweisen, die zu komplexen, wartungsintensiven Düsen zusammengebaut werden, wodurch die gezeigten technischen Lösungen in ihrer Produktion und Wartung teuer sind.

GB 715 818 A offenbart eine Sprüheinrichtung zum Versprühen von Stoffen aufweisend eine Sprühdüse, wobei die Sprühdüse ein den zu versprühenden Stoff führendes Innenrohr aufweist und in dem Innenrohr beabstandet zu einer Innenrohr-Austrittsöffnung eine Engstelle angeordnet ist.

In der RU 2 441 710 C2 wird ebenfalls eine Sprühdüse gezeigt, die in dem den zu versprühenden Stoff führenden Innenrohr eine Engstelle stromauf der Innenrohr-AustrittsÖffnung angeordnet ist.

WO 2007/080084 A1 betrifft eine Zweistoffdüse zum Versprühen von Flüssigkeiten unter Zuhilfenahme eines Druckgases mit einer Mischkammer, in welche die Flüssigkeit und das Druckgas eingeleitet werden, einem in Strömungsrichtung konvergenten Abschnitt am Austritt der Mischkammer und einem in Strömungsrichtung divergenten Düsenaustrittsteil, der sich von einer Engstelle bis zu einem Düsenmund erstreckt. Erfindungsgemäß weist der divergente Düsenaustrittsteil einen sich von der Engstelle bis zum Düsenmund allmählich erweiternden Querschnitt auf, so dass im divergenten Düsenaustrittsteil bis hin zum Düsenmund Überschallgeschwindigkeit erreicht wird.

Aufgabe der Erfindung ist es daher eine kostengünstige und aufgrund ihrer geringen Anzahl an Einzelteilen einfach herzustellende und zu fertigende selbstreinigende Düse bereitzustellen, die die Nachteile des Standes der Technik beseitigt.

Diese Aufgabe wird bei einer Düse der eingangs genannten Art dadurch gelöst, dass die Engstelle aus einem flexiblen Material ausgebildet ist. Diese Ausgestaltung der Düse weist den Vorteil auf, dass am Düsenmundstück, insbesondere an der Innenrohr-Austrittsöffnung und/oder der Außenrohr-Austrittsöffnung, Anbackungen und/oder Ablagerungen stark reduziert werden und gleichzeitig eine Düse bereitgestellt wird, die aus nur sehr wenigen Bauteilen besteht. Überdies wird durch die Engstelle in der Düse ein für das Versprühen/Verdüsen notwendiger, definierter Druck aufgebaut, der an der Engstellen-Austrittsöffnung anliegt. Die Engstellen-Austrittsöffnung entspricht somit einer Düsenöffnung, der die Tröpfchengröße, insbesondere den Tröpfchendurchmesser, einstellt. Es wurde überraschenderweise festgestellt, dass diese sehr wichtige Kenngröße durch eine im Vergleich zur Engstellen-Austrittsöffnung (Düsenöffnung) vergrößerte Innenrohr-Austrittsöffnung nicht beeinflusst wird.

Diesbezüglich vorteilhaft ist das flexible Material ein Polymer, bevorzugt ein synthetisches Polymer, insbesondere ein Silikon ist. Polymere sind vielseitige Materialien, die bspw. kostengünstig herstellbar, sehr robust aber auch je nach Polymer sehr temperaturbeständig sind. Die Polymere, insbesondere die synthetischen Polymere, sind daher sehr gut als flexibles Material für die Engstelle und die unterschiedlichsten zu versprühenden Stoffe geeignet.

Nach einer diesbezüglich vorteilhaften Ausgestaltung der Düse ist die Engstelle als ein eine Innenrohrkanalabschnittslänge aufweisender Innenrohrkanalabschnitt ausgebildet. Dadurch wird in dem zu versprühenden Stoff, insbesondere Dispersionen, Emulsionen oder Suspensionen, der anstehende Druck nochmals erhöht, was den gesamten Sprühvorgang deutlich verbessert wird. Bevorzugt weist der Innenrohrkanalabschnitt über der Innenrohrkanalabschnittslänge eine konstante Innenrohrkanal-Querschnittsfläche oder in Strömungsrichtung des zu versprühenden Stoffs eine kleiner werdende Innenrohrkanal-Querschnittfläche auf. Durch die in Strömungsrichtung des zu versprühenden Stoffs kleiner werdende Innenrohrkanal-Querschnittfläche wird das Einlaufverhalten des zu versprühenden Stoffs verbessert indem Turbulenzen reduziert werden, wodurch der nach der Engstelle stattfindende Sprühvorgang optimiert wird.

Entsprechend einer zusätzlichen vorteilhaften Weiterbildung der Düse weist die Engstelle eine Engstellen-Austrittsöffnung auf, wobei sich die Innenrohrkanal-Querschnittsfläche über einer Engstellenauslaufstrecke in Strömungsrichtung des zu versprühenden Stoffes aufweitet. Im Zuge dessen wird dem zu versprühenden Stoff beim Versprühen weniger Angriffsfläche für Anbackungen und/oder Ablagerungen gegeben und die Anbackungen und/oder Ablagerungen werden somit minimiert.

Des Weiteren sind gemäß einer zusätzlichen vorteilhaften Fortbildung der Düse das Innenrohr und das Außenrohr koaxial um eine Längsachse angeordnet. Besonders bevorzugt sind das Innenrohr und das Außenrohr dergestalt zueinander angeordnet, dass die Innenrohr-Austrittsöffnung konzentrisch zu der Außenrohr-Austrittsöffnung angeordnet ist. Hierdurch wird die Strömungsführung, insbesondere die Strömungsführung des Gases in einem Ringspalt deutlich verbessert, sodass die Spraysymmetrie und die Tröpfchengröße verbessert einstellbar sind.

Überdies ist in einer zusätzlichen vorteilhaften Ausgestaltung der Düse im Bereich des Düsenmundstückes zwischen dem Innenrohr und dem Außenrohrs ein Anbauteil in Form von Drallkörpern, Drallblechen oder dergleichen zur Gasführung angeordnet. Diesbezüglich bevorzugt ist das Anbauteil im Außenrohr zur Führung des Innenrohrs angeordnet. Darüber hinaus besonders bevorzugt das Anbauteil mit dem Innenrohr und/oder dem Außenrohr fest verbunden. Durch den Einbau eines Anbauteils in Form von Drallkörpern, Drallblechen oder dergleichen kann die Strömungsführung des Gases, insbesondere der Zerstäuberluft, am Düsenmundstück beeinflusst werden. Hierdurch kann insbesondere auch das Bewegungs- und Schwingungsverhalten des Düsenmundstücks verändert werden, sodass Anbackungen am Düsenmundstück minimierbar sind. Zusätzlich sind die Sprühsymmetrie und die Tröpfchengröße des Sprays, d. h. der zu verdüsenden Flüssigkeit, direkt einstellbar. Des Weiteren wird das Innenrohr beim Einbau im Außenrohr geführt und stets in der gewünschten Position gehalten. Zudem verhindert das Anbauteil ein Schwingen des Innenrohrs, was zu einer Veränderung der Maße der Innenrohr- Austrittsöffnung und der Außenrohr-Austrittsöffnung führt, was die Strömungsverhältnisse des zu versprühenden Stoffes und des Gases am Düsenmundstück ändert und somit auch die Spraysymmetrie und die Tröpfchengröße.

Zweckmäßigerweise ist in und/oder an dem flexiblen Material eine ein Kammervolumen aufweisende Fluidkammer angeordnet, die zur Fluidaufnahme oder Fluidabgabe geeignet sind, sodass in der Engstelle die Innenrohrkanal-Querschnittsfläche einstellbar ist.

Weiter bevorzugt ist das Innenrohr mehrteilig ausgebildet. Hierdurch besteht die Möglichkeit die Einstelle separat zu fertigen und/oder die Engstelle aus flexiblem Material zu fertigen und anschließend in das Innenrohr zu integrieren.

Zweckmäßigerweise findet die bevorzugte Düse in einem Fluidisierungsapparat oder einer Beschichtungseinrichtung Verwendung.

Die einzelnen Bauteile der Düse, insbesondere das Innen- und das Außenrohr, werden bevorzugt durch ein Spritzgießverfahren hergestellt. Hierdurch wird eine kostengünstige und gewichtsparende Alternative aus Kunststoff zu den herkömmlichen Düsen aus Metall geschaffen. Zweckmäßigerweise wird sogar die gesamte Düse einstückig durch ein Spritzgießverfahren hergestellt, was eine deutliche Verbesserung zu den herkömmlichen Düsen darstellt, da einerseits Fehler im Zusammenbau vermieden werden und andererseits die Düse zu einer Wegwerfdüse wird, d.h. es ist keine Reinigung der Düse mehr erforderlich. Diese Wegwerfdüsen werden nach deren Verwendung ausgetauscht. Hierzu wird ein spezieller Kunststoff verwendet, dessen Eigenschaften in Bezug auf die Oberflächenbeschaffenheit Anbackungen und/oder Ablagerungen minimiert.

Entsprechend einer diesbezüglichen Ausgestaltung der bevorzugten Düse sind in und/oder an dem flexiblen Material mehrere ein Kammervolumen aufweisende Fluidkammern angeordnet, die zur Fluidaufnahme oder Fluidabgabe geeignet sind, sodass in der Engstelle die Innenrohrkanal-Querschnittsfläche und/oder im Außenrohr eine Außenrohrkanal-Querschnittsfläche einstellbar ist. Die unabhängig voneinander einstellbare Innenrohrkanal-Querschnittsfläche oder Außenrohrkanal-Querschnittsfläche bieten den Vorteil, die Volumenströme von dem zu versprühenden Stoff unabhängig von dem Gas, insbesondere einem Zerstäubergas, wie Luft, einzustellen und somit auf die sich während des Prozesses ändernden Prozessbedingungen individuell reagieren zu können.

Außerdem wird diese Aufgabe bei einem Verfahren eingangs genannter Art dadurch gelöst, dass in dem den zu versprühenden Stoff führenden Innenrohrkanal in einem Abstand zur Innenrohr-Austrittsöffnung eine Engstelle angeordnet ist, wobei in der Engstelle die Innenrohrkanal-Querschnittsfläche kleiner ist als die Innenrohrkanal-Querschnittsfläche eines Innenrohrkanalaustrittsabschnitts zwischen der Engstelle und der Innenrohr-Austrittsöffnung und die Engstelle aus einem flexiblen Material ausgebildet ist, wobei die Engstelle eine Schließ-Stellung zum Verschließen des Innenrohrkanals und zumindest eine Offen-Stellung aufweist, wobei in der zumindest einen Offen-Stellung zumindest der Innenrohrkanal für den zu versprühenden Stoff durchströmbar ist, wobei in und/oder an dem flexiblen Material eine ein Kammervolumen aufweisende Fluidkammer angeordnet sind, die zur Fluidaufnahme oder Fluidabgabe geeignet sind, sodass in der Engstelle die Innenrohrkanal-Querschnittsfläche einstellbar ist, wodurch die Düse von der einen Schließ-Stellung des Innenrohrkanals in die zumindest eine Offen-Stellung des Innenrohrkanals verbringbar ist oder verbracht wird und umgekehrt. Der Vorteil des bevorzugten Verfahrens liegt darin, dass der Volumenstrom des zu versprühenden Stoffs optimal auf die Bedürfnisse des laufenden Prozesses, insbesondere in Bezug auf die Tröpfchengröße des versprühten Stoffs, einstellbar wird.

Nach einem diesbezüglich vorteilhaft ausgestalteten Verfahren beginnt beim Verbringen der Engstelle von der einen Schließ-Stellung des Innenrohrkanals in die zumindest eine Offen-Stellung des Innenrohrkanals das durch das Außenrohr strömende Gas zumindest zeitgleich mit dem Verbringen der Engstelle von der einen Schließ-Stellung des Innenrohrkanals in die zumindest eine Offen-Stellung des Innenrohrkanals durch das Außenrohr zu strömen beginnt. Vorteilhafterweise wird durch das Verfahren sichergestellt, dass beim Anfahren des Sprühvorgangs am Düsenmund, d.h. der Innenrohr-Austrittsöffnung und der Außenrohr-Austrittsöffnung, nicht zu einem Austritt von zu versprühendem Stoff kommt, ohne dass dieser direkt durch das durch den Ringspalt strömende Gas zerstäubt wird. Eine Zerstäubung wird somit stets gewährleistet. Hierdurch kommt es zum einen nicht zu Ablagerungen bzw. Anbackungen am Düsenmund bspw. beim Trocknen des zu früh ausgetretenen zu versprühenden Stoffs und zum anderen nicht zu einer Agglomeration von zu besprühenden Partikeln aufgrund von nicht zerstäubten zu versprühenden Stoff.

Bevorzugt beginnt beim Verbringen der Engstelle von der einen Schließ-Stellung des Innenrohrkanals in die zumindest eine Offen-Stellung des Innenrohrkanals das durch das Außenrohr strömende Gas vor dem Verbringen der Engstelle von der einen Schließ-Stellung des Innenrohrkanals in die zumindest eine Offen-Stellung des Innenrohrkanals durch das Außenrohr zu strömen. Hierdurch wird die Zugabe des zu versprühenden Stoffs weiter dahingehend optimiert, dass es nicht zu einem Austritt von zu versprühendem Stoff kommt, ohne dass dieser direkt durch das durch den Ringspalt strömende Gas zerstäubt wird. Eine Zerstäubung wird somit ebenfalls stets gewährleistet, wobei das durch den Ringspalt strömende Gas - Zerstäubergas - sich bereits auf den richtigen Volumenstrom für den zu versprühenden Stoff eingestellt hat, wodurch Ablagerungen am Düsenmund bzw. Agglomerationen von zu besprühenden Partikeln aufgrund von nicht zerstäubten zu versprühenden Stoff sicher verhindert werden.

Entsprechend einer zusätzlichen vorteilhaften Fortbildung des bevorzugten Verfahrens stoppt beim Verbringen der Engstelle von der zumindest eine Offen-Stellung des Innenrohrkanals in die eine Schließ-Stellung des Innenrohrkanals das durch das Außenrohr strömende Gas frühestens zeitgleich mit dem Verbringen der Engstelle von der zumindest eine Offen-Stellung des Innenrohrkanals in die eine Schließ-Stellung des Innenrohrkanals durch das Außenrohr zu strömen. Besonders bevorzugt stoppt beim Verbringen der Engstelle von der zumindest eine Offen-Stellung des Innenrohrkanals in die eine Schließ-Stellung des Innenrohrkanals das durch das Außenrohr strömende Gas frühestens nach dem Verbringen der Engstelle von der zumindest eine Offen-Stellung des Innenrohrkanals in die eine Schließ-Stellung des Innenrohrkanals durch das Außenrohr zu strömen. Dieser Verfahrensschritt stellt sicher, dass auch beim Beenden eines Sprühvorgangs stets der gesamte aus der Austrittsöffnung des Innenrohrs im Bereich des Düsenmundstücks austretende zu versprühende Stoff durch das durch den Ringspalt strömende Gas zerstäubt wird.

Gemäß einer zusätzlichen vorteilhaften Weiterbildung des Verfahrens ist oder wird das Kammervolumen der Fluidkammer durch Fluidaufnahme oder Fluidabgabe stufenlos veränderbar oder verändert oder die Kammervolumina der Fluidkammern sind oder werden durch Fluidaufnahme oder Fluidabgabe stufenlos veränderbar oder verändert. Diesbezüglich vorteilhaft sind oder werden die Kammervolumina der Fluidkammern durch Fluidaufnahme oder Fluidabgabe unabhängig voneinander veränderbar oder verändert. Besonders bevorzugt ist oder wird das Kammervolumen oder die Kammervolumina der entsprechenden Fluidkammer durch Fluidaufnahme oder Fluidabgabe unabhängig voneinander veränderbar oder verändert. Durch die stufenlose Einstellbarkeit des Kammervolumens der Fluidkammer der Engstelle oder der Kammervolumina der Fluidkammern ist es möglich die Volumenströme des zu versprühenden Stoffs und des den zu versprühenden Stoff zerstäubenden Gases genau und gezielt einzustellen, sodass die Symmetrie und die Tröpfchengröße des Sprays optimal für den jeweiligen Prozess, insbesondere einen Coatingprozess von Partikeln, vorzugsweise Tabletten, einstellbar ist oder eingestellt wird. Durch die unabhängige Einstellbarkeit der Kammervolumen oder -volumina ist ebenfalls eine optimale Anpassung des Volumenstroms des zu versprühenden Stoffs auf das Zerstäubergas und umgekehrt möglich. Hierdurch kann auch auf die kleinsten Veränderungen in der Symmetrie oder Tröpfchengröße im Spray reagiert werden.

Diesbezüglich bevorzugt sind die mehreren Fluidkammern so ansteuerbar, dass der Innenrohrkanal des Innenrohrs oder das Außenrohr unabhängig voneinander freigebbar und verschließbar sind. Die unabhängig voneinander ansteuerbaren Fluidkammern erlauben es die Innenrohrkanal-Querschnittsfläche und/oder die Außenrohr-Querschnittsfläche unabhängig voneinander in ihrer Fläche zu verändern, sodass der Volumenstrom von dem zu versprühenden Stoff unabhängig von dem Gas, insbesondere einem Zerstäubergas, wie Luft, einstellbar ist und um somit auf die sich während des Prozesses ändernden Prozessbedingungen individuell reagieren zu können.

Nachfolgend wird die Erfindung anhand der beiliegenden Zeichnung näher erläutert und in dieser zeigen
- Figur 1: eine Schnittdarstellung einer ersten Ausführungsform einer bevorzugten Düse,
- Figur 2: eine Draufsicht auf das Düsenmundstück der ersten Ausführungsform der bevorzugten Düse,
- Figur 3: eine Schnittdarstellung einer zweiten Ausführungsform einer bevorzugten Düse mit einer Engstelle in einer ersten Offen-Stellung,
- Figur 4: eine Schnittdarstellung der zweiten Ausführungsform der bevorzugten Düse mit der Engstelle in einer zweiten Offen-Stellung,
- Figur 5: eine Schnittdarstellung der zweiten Ausführungsform der bevorzugten Düse mit der Engstelle in einer Schließ-Stellung, wobei in der Schließstellung sowohl der Innenrohrkanal als auch der Ringspalt geschlossen sind,
- Figur 6: eine Schnittdarstellung einer dritten Ausführungsform einer bevorzugten Düse mit der Engstelle in einer ersten Offen-Stellung und einem Anbauteil, wobei eine Engstelle als ein eine Innenrohrkanalabschnittslänge aufweisender Innenrohrkanalabschnitt ausgebildet ist, und wobei der Innenrohrkanalabschnitt über der Innenrohrkanallänge in Strömungsrichtung des zu versprühenden Stoffs eine kleiner werdende Innenrohrkanal-Querschnittfläche aufweist,
- Figur 7: eine Schnittdarstellung einer vierten Ausführungsform einer bevorzugten Düse mit mehreren im Bereich der Engstelle angeordneten Fluidkammern, wobei die Engstelle in einer Offen-Stellung ausgebildet ist und
- Figur 8: eine Schnittdarstellung einer fünften Ausführungsform einer bevorzugten Düse mit mehreren im Bereich der Engstelle angeordneten Fluidkammern, wobei die Engstelle in einer Offen-Stellung ausgebildet ist und die Fluidkammern entweder eine InnenrohrkanalAustrittsöffnungsfläche oder eine AußenrohrkanalÖffnungsfläche einstellen.

Sofern keine anderslautenden Angaben gemacht werden, bezieht sich die nachfolgende Beschreibung auf sämtliche in der Zeichnung illustrierten Ausführungsformen einer erfindungsgemäßen Düse 1 zum Versprühen von Stoffen und/oder eines erfindungsgemäßen Verfahrens zur Steuerung oder Regelung des Volumenstroms eines zu versprühenden Stoffes und/oder eines Gases einer zum Versprühen von Stoffen, insbesondere Dispersionen, Emulsionen oder Suspensionen, geeigneten Düse 1.

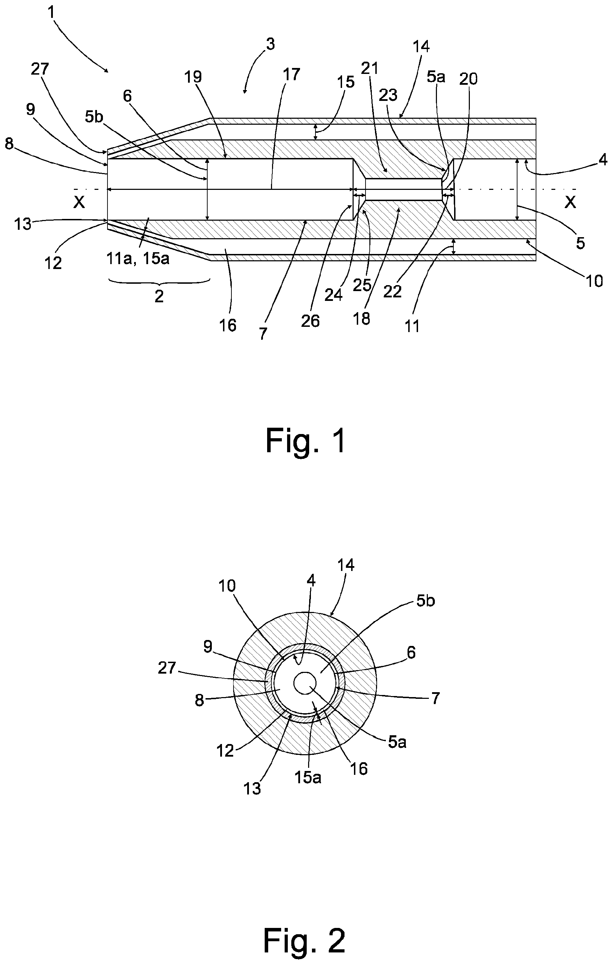

Fig. 1 zeigt eine Schnittdarstellung einer nicht erfindungsgemäßen Ausführungsform einer Düse 1.

Die Düse 1 zum Verdüsen von Stoffen, insbesondere Dispersionen, Emulsionen oder Suspensionen, umfasst einen ein Düsenmundstück 2 und eine Längsachse X-X aufweisenden Düsenkörper 3. Der Düsenkörper 3 weist ein mit einer Zuführung für den zu versprühenden Stoff verbundenes, über einen eine Innenrohrkanal-Innenwandung 4, einen eine Innenrohrkanal-Querschnittsfläche 5 aufweisenden Innenrohrkanal-Querschnitt 6 umfassenden Innenrohrkanal 7 und eine eine Innenrohr-Austrittsöffnungsfläche 8 aufweisende Innenrohr-Austrittsöffnung 9 verfügendes Innenrohr 10 auf. Das Innenrohr 10 der Düse 1 ist in der ersten Ausführungsform einteilig ausgebildet, zweckmäßigerweise aus einem Kunststoff.

Der Düsenkörper 3 weist ein das Innenrohr 10 mit radialem Abstand 11 umschließendes und mit einer Zuführung für ein Gas verbundenes eine eine Außenrohr-Austrittsöffnungsfläche 12 aufweisende Außenrohr-Austrittsöffnung 13 umfassendes Außenrohr 14 auf. Zwischen Innenrohr 10 und Außenrohr 14 bildet sich ein eine Ringspaltweite 15 aufweisender Ringspalt 16 aus. Im Bereich des Düsenmundstücks 2 nimmt die Ringspaltweite 15a des Ringspalts 16 ab.

Das Innenrohr 10 und das Außenrohr 14 sind in der gezeigten Ausführungsform koaxial um die Längsachse X-X angeordnet, wodurch das Innenrohr 10 im Wesentlichen an jeder Position der Längsachse X-X den gleichen Abstand 11 zum Außenrohr 14 aufweist. Im Bereich des Düsenmundstücks 2 ist der Abstand 11a zwischen Innenrohr 10 und Außenrohr 14 geringer, entsprechend der kleineren Ringspaltweite 15a. In der ersten Ausführungsform der bevorzugten Düse 1 sind das Innenrohr 10 und das Außenrohr 14 dergestalt zueinander angeordnet, dass die Innenrohr-Austrittsöffnung 9 konzentrisch zu der Außenrohr-Austrittsöffnung 13 angeordnet ist. Andere nicht konzentrische Anordnungen der Innenrohr-Austrittsöffnung 9 zu der Außenrohr-Austrittsöffnung 13 sind in nicht gezeigten Ausführungsformen realisiert. Überdies sind die Innenrohr-Austrittsöffnung 9 und die Außenrohr-Austrittsöffnung 13 im Bereich des Düsenmundstückes 2 angeordnet.

In dem den zu versprühenden Stoff führenden Innenrohrkanal 7 ist in einem Abstand 17 zur Innenrohr-Austrittsöffnung 9 eine Engstelle 18 angeordnet. In der Engstelle 18 ist die Innenrohrkanal-Querschnittsfläche 5a kleiner als die Innenrohrkanal-Querschnittsfläche 5b eines Innenrohrkanalaustrittsabschnitts 19 zwischen der Engstelle 18 und der Innenrohr-Austrittsöffnung 13.

Überdies ist die Engstelle 18 in der dargestellten ersten Ausführungsform als ein eine Innenrohrkanalabschnittslänge 20 aufweisender Innenrohrkanalabschnitt 21 ausgebildet. Hierbei weist der Innenrohrkanalabschnitt 21 über der Innenrohrkanallänge 20 eine konstante Innenrohrkanal-Querschnittsfläche 5a aufweist. In anderen nicht gezeigten Ausführungsformen ist die Engstelle 18 bspw. als Blende oder als Drossel ausgebildet.

Darüber hinaus weist die Engstelle 18 eine eine Engstelleneinlauflänge 22 aufweisende Engstelleneinlaufstrecke 23 und eine eine Engstellenauslauflänge 24 umfassende Engstellenauslaufstrecke 25 auf. Über eine Engstelleneinlauflänge 22 reduziert sich die Innenrohrkanal-Querschnittsfläche 5 bis auf die Innenrohrkanal-Querschnittsfläche 5a.

Die Innenrohrkanal-Querschnittsfläche 5a vergrößert sich über der Engstellenauslauflänge 24 in Strömungsrichtung des zu versprühenden Stoffes auf die Innenrohrkanal-Querschnittsfläche 5b. Ablagerungen und/0der Anbackungen können sich somit im Bereich einer Engstellen-Austrittsöffnung 26 der Engstelle 18, die der Düsenöffnung entspricht, nicht oder nur sehr schwer bilden.

In der Fig. 2 wird eine Draufsicht auf das Düsenmundstück 2 der ersten Ausführungsform der Düse 1 gezeigt.

Wie schon in Fig. 1 beschrieben umschließt das Außenrohr 14 das Innenrohr 10. Das Außenrohr 14 ist radial zu dem den Innenrohrkanal 7 aufweisenden Innenrohr 10 beabstandet. Zwischen dem Außenrohr 14 und dem Innenrohr 10 bildet sich der die Ringspaltweite 15 aufweisende Ringspalt 16, durch den das Gas, insbesondere das Zerstäubergas, strömt.

Das Außenrohr 14 weist die kreisförmige Außenrohr-Austrittsöffnung 13 mit der kreisförmig ausgebildeten Außenrohr-Austrittsöffnungsfläche 12 und eine Außenrohrstirnfläche 27 auf. An der Außenrohrstirnfläche 27 bilden sich bevorzugt die Anbackungen und/oder Anlagerungen aus, die das Sprühbild der Düse 1 beeinträchtigen.

Das den Innenrohrkanal 7 mit der Innenrohrkanal-Innenwandung 4 aufweisende Innenrohr 10 verfügt in der ersten Ausführungsform über die die kreisförmig ausgebildete Innenrohr-Austrittsöffnungsfläche 8 aufweisende kreisförmige Innenrohr-Austrittsöffnung 9.

In der in Fig. 2 dargestellten ersten Ausführungsform der bevorzugten Düse 1 sind das Innenrohr 10 und das Außenrohr 14 dergestalt zueinander angeordnet, dass die Innenrohr-Austrittsöffnung 9 konzentrisch zu der Außenrohr-Austrittsöffnung 13 angeordnet ist.

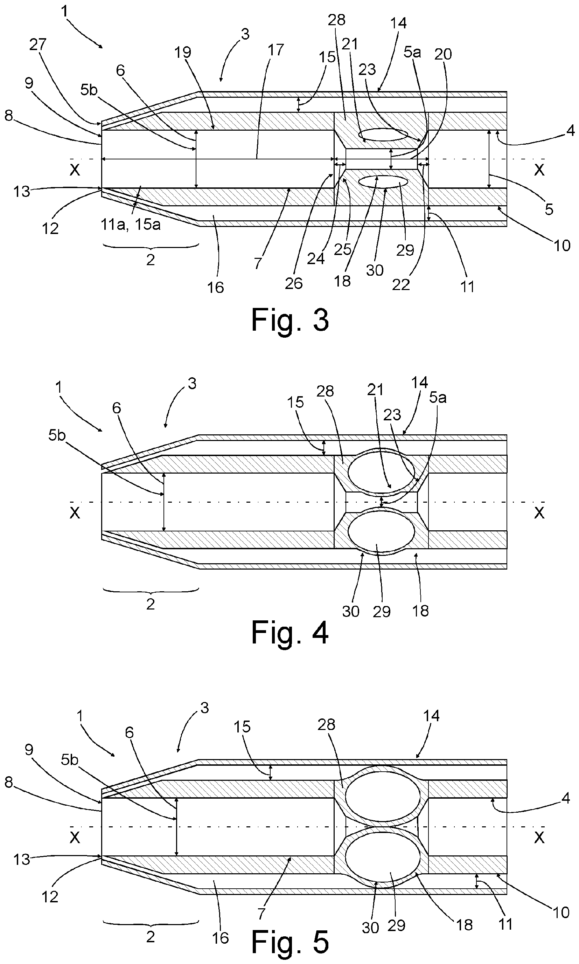

Fig. 3 zeigt eine Schnittdarstellung einer zweiten Ausführungsform einer bevorzugten Düse 1. Das Innenrohr der Düse 1 ist im Gegensatz zur in den Fign. 1 und 2 dargestellten ersten Ausführungsform der Düse 1 mehrteilig ausgebildet. Zweckmäßigerweise ist die Engstelle 18 als ein die Innenrohrkanalabschnittslänge 20 aufweisender Innenrohrkanalabschnitt 21 ausgebildet, wobei die Engstelle 18 aus einem flexiblen Material 28 ausgebildet ist.

Das flexible Material 28 ist zweckmäßigerweise ein Polymer, bevorzugt ein synthetisches Polymer, insbesondere ein Silikon.

In dem flexiblen Material 28 ist eine ein Kammervolumen 29 aufweisende Fluidkammer 30 angeordnet. Die Fluidkammer 30 ist zur Fluidaufnahme oder Fluidabgabe geeignet, sodass in der Engstelle 18 die Innenrohrkanal-Querschnittsfläche 5a einstellbar ist. D.h. durch die Fluidaufnahme oder Fluidabgabe aus den Kammervolumen 29 der Fluidkammer 30 ist ein Volumenstrom des durch den Innenrohrkanal 7 strömenden Stoffes variabel veränderbar und zweckmäßigerweise exakt einstellbar. Zudem verfügt die Fluidkammer 30 zweckmäßigerweise über eine Zuleitung und eine Ableitung für ein das Kammervolumen 29 einstellende Fluid, insbesondere ein Gas. Durch Fluidaufnahme vergrößert sich das Kammervolumen 29, durch Fluidabgabe verkleinert sich das Kammervolumen 29 entsprechend.

Die bevorzugte Düse 1 gemäß der zweiten Ausführungsform entspricht in ihrem grundlegenden Aufbau ansonsten der in den Fign. 1 und 2 gezeigten ersten Ausführungsform der bevorzugten Düse 1.

In der in Fig. 3 gezeigten zweiten Ausführungsform ist das Kammervolumen 29 der Fluidkammer 30 derart gefüllt, dass sich die Düse 1 in einer ersten Offen-Stellung befindet. Das Kammervolumen 29 der Fluidkammer 30 ist leer. Die Innenrohrkanal-Querschnittsfläche 5a ist über der gesamten Innenrohrkanalabschnittslänge 20 der als Innenrohrkanalabschnitt 21 ausgebildeten Engstelle 18 maximal.

Fig. 4 stellt eine Schnittdarstellung der zweiten Ausführungsform der bevorzugten Düse 1 mit der Engstelle 18 in einer zweiten Offen-Stellung dar. In der zweiten Offen-Stellung hat sich das Kammervolumen 29 der Fluidkammer 30 durch Fluidaufnahme vergrößert. Durch das vergrößerte Kammervolumen 29 wird einerseits die Innenrohrkanal-Querschnittsfläche 5a reduziert und entsprechend der Ausgestaltung des flexiblen Materials 28 auch die Ringspaltweite 15 des Ringspalts 16. Insbesondere ist das Kammervolumen 29 der Fluidkammer 30 durch Fluidaufnahme oder Fluidabgabe stufenlos veränderbar. Hierdurch besteht die Möglichkeit den Volumenstrom des durch den Innenrohrkanal 7 strömenden, zu versprühenden Stoffes und/oder des durch den Ringspalt 16 strömenden Gases exakt einzustellen.

In weiteren Ausführungsformen wurde das flexible Material 28 der Engstelle 18 derart ausgestaltet, dass entweder der durch den Innenrohrkanal 7 strömende zu versprühende Stoff oder das durch den Ringspalt 16 strömende Gas einstellbar ist.

Fig. 5 zeigt eine Schnittdarstellung der zweiten Ausführungsform der bevorzugten Düse 1 mit der Engstelle 18 in einer Schließ-Stellung, wobei in der Schließ-Stellung sowohl der Innenrohrkanal 7 als auch der Ringspalt 16 geschlossen sind.

Die Fign. 3 bis 5 beschreiben ein Verfahren zur Steuerung oder Regelung des Volumenstroms eines zu versprühenden Stoffes und eines Gases einer zum Versprühen von Stoffen, insbesondere Dispersionen, Emulsionen oder Suspensionen, geeigneten Düse 1.

Entsprechend weist die Düse 1 einen ein Düsenmundstück 2 und eine Längsachse X-X aufweisenden Düsenkörper 3 auf. Hierbei umfasst der Düsenkörper 3 ein mit einer Zuführung für den zu versprühenden Stoff verbundenes, über einen eine Innenrohrkanal-Innenwandung 4, einen eine Innenrohrkanal-Querschnittsfläche 8 aufweisenden Innenrohrkanal-Querschnitt 9 umfassenden Innenrohrkanal 7 und eine eine Innenrohr-Austrittsöffnungsfläche 8 aufweisende Innenrohr-Austrittsöffnung 9 verfügendes Innenrohr 10 und ein das Innenrohr 10 mit radialem Abstand 11 umschließendes und mit einer Zuführung für ein Gas verbundenes eine eine Außenrohr-Austrittsöffnungsfläche 12 aufweisende Außenrohr-Austrittsöffnung 13 umfassendes Außenrohr 14.

Die Innenrohr-Austrittsöffnung 9 und die Außenrohr-AustrittsÖffnung 13 sind im Bereich des Düsenmundstückes 2 angeordnet.

In dem den zu versprühenden Stoff führenden Innenrohrkanal 7 ist in einem Abstand 17 zur Innenrohr-Austrittsöffnung 9 eine Engstelle 18 angeordnet, wobei in der Engstelle 18 die Innenrohrkanal-Querschnittsfläche 5a kleiner ist als die Innenrohrkanal-Querschnittsfläche 5b eines Innenrohrkanalaustrittsabschnitts 19 zwischen der Engstelle 18 und der Innenrohr-Austrittsöffnung 13. Das Innenrohr 10 ist mehrteilig ausgebildet.

Die Engstelle 18 ist hierbei aus einem flexiblen Material 28 ausgebildet, wobei die Engstelle 18 eine Schließ-Stellung zum Verschließen des Innenrohrkanals 7 und zumindest eine Offen-Stellung aufweist, wobei in der zumindest einen Offen-Stellung zumindest der Innenrohrkanal 7 für den zu versprühenden Stoff durchströmbar ist. Im Bereich der Engstelle 18 ist in dem flexiblen Material 28 eine ein Kammervolumen 29 aufweisende Fluidkammer 30 angeordnet, die zur Fluidaufnahme oder Fluidabgabe geeignet ist, sodass in der Engstelle 18 die Innenrohrkanal-Querschnittsfläche 5a einstellbar ist, wodurch die Düse von der einen Schließ-Stellung des Innenrohrkanals 7 in die zumindest eine Offen-Stellung des Innenrohrkanals 7 verbringbar ist oder verbracht wird und umgekehrt.

Beim Verbringen der Engstelle 18 von der einen Schließ-Stellung des Innenrohrkanals 7 in die zumindest eine Offen-Stellung des Innenrohrkanals 7 beginnt das durch den Ringspalt 16 des Außenrohrs 14 strömende Gas zumindest zeitgleich mit dem Verbringen der Engstelle 18 von der einen Schließ-Stellung des Innenrohrkanals 7 in die zumindest eine Offen-Stellung des Innenrohrkanals 7 durch das Außenrohr 14 zu strömen. In einer bevorzugten Ausgestaltung der Düse 1 beginnt beim Verbringen der Engstelle 18 von der einen Schließ-Stellung des Innenrohrkanals 7 in die zumindest eine Offen-Stellung des Innenrohrkanals 7 das durch das Außenrohr 14 strömende Gas vor dem Verbringen der Engstelle 18 von der einen Schließ-Stellung des Innenrohrkanals 7 in die zumindest eine Offen-Stellung des Innenrohrkanals 7 durch das Außenrohr 14 zu strömen.

Überdies stoppt beim Verbringen der Engstelle 18 von der zumindest eine Offen-Stellung des Innenrohrkanals 7 in die eine Schließ-Stellung des Innenrohrkanals 7 das durch den Ringspalt 16 des Außenrohrs 14 strömende Gas frühestens zeitgleich mit dem Verbringen der Engstelle 18 von der zumindest eine Offen-Stellung des Innenrohrkanals 7 in die eine Schließ-Stellung des Innenrohrkanals 7 durch das Außenrohr 14 zu strömen. Zweckmäßigerweise stoppt beim Verbringen der Engstelle 18 von der zumindest eine Offen-Stellung des Innenrohrkanals 7 in die eine Schließ-Stellung des Innenrohrkanals 7 das durch das Außenrohr 14 strömende Gas frühestens nach dem Verbringen der Engstelle 18 von der zumindest eine Offen-Stellung des Innenrohrkanals 7 in die eine Schließ-Stellung des Innenrohrkanals 7 durch das Außenrohr 14 zu strömen.

Die bevorzugte Düse 1 weist in der gezeigten Ausführungsform eine Schließ-Stellung für das Innenrohr 10 und auch das Außenrohr 14, insbesondere den Ringspalt 16, auf. Hierbei sind sowohl das Innenrohr 10 als auch das Außenrohr 14 in Abhängigkeit voneinander freigebbar und verschließbar.

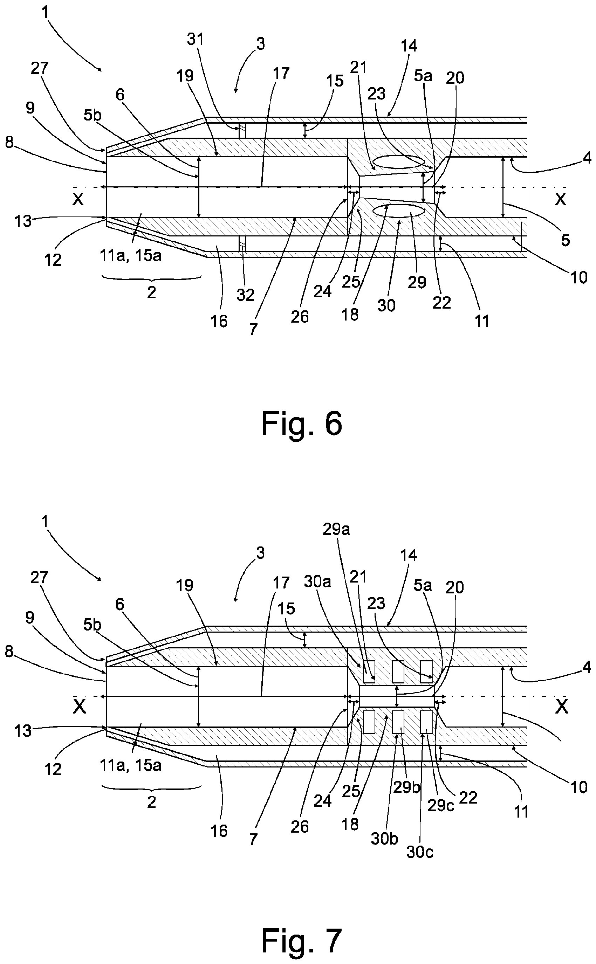

In der Fig. 6 wird eine Schnittdarstellung einer dritten Ausführungsform einer bevorzugten Düse 1 mit einer Engstelle 18 in einer ersten Offen-Stellung und einem im Ringspalt 29 zwischen Innenrohr 10 und Außenrohr 14 angeordneten optionalen Anbauteil 29 gezeigt.

Die bevorzugte Düse 1 gemäß der dritten Ausführungsform entspricht in ihrem grundlegenden Aufbau der in den Fign. 3 bis 5 gezeigten zweiten Ausführungsform der bevorzugten Düse 1. Der Unterschied zwischen den beiden Ausführungsformen ist, dass die bevorzugte Düse 1 der dritten Ausführungsform im Gegensatz zur Düse 1 der zweiten Ausführungsform ein optionales Anbauteil 31 aufweist, das in Form eines Drallblechs zur Gasführung ausgebildet ist. Zudem ist die Engstelle 18 als Innenrohrkanalabschnitt 21 ausgebildet, der eine Innenrohrkanalabschnittslänge 20 aufweist, und wobei der Innenrohrkanalabschnitt 21 über der Innenrohrkanallänge 20 in Strömungsrichtung des zu versprühenden Stoffs eine kleiner werdende Innenrohrkanal-Querschnittfläche 5a aufweist.

In der vorliegenden dritten Ausführungsform der bevorzugten Düse 1 weist das Anbauteil 31 Öffnungen 32 auf, die winklig zum parallel zum Außenrohr 14 strömenden Gas, insbesondere einer Zerstäuberluft, ausgebildet sind. Hierdurch erfährt das im Ringspalt 16 strömende Gas einen Drall um die Längsachse X-X. Durch den Drall um die Längsachse X-X kann die Anströmung des zu versprühenden Stoffes an der Außenrohr-Austrittsöffnung 13 des Außenrohrs 14 beeinflusst werden. Die Öffnungen 32 können, wie in anderen nicht gezeigten Ausführungsformen realisiert auch andere Winkel und Öffnungsweiten aufweisen. Durch diese wurde ein Drall des Gases erzeugt, wodurch das Sprühbild des Sprays und somit auch die Tröpfchengröße einstellbar ist.

Bevorzugt ist das Anbauteil 31 im Bereich des Düsenmundstückes 2 zwischen dem Außenrohr 14 und dem Innenrohr 10 angeordnet. Besonders bevorzugt ist das Anbauteil 31 zur Führung des Innenrohrs 10 angeordnet.

Das Anbauteil 31 kann ebenso in Form von Drallkörpern, z. B. Strömungsleitblechen oder dergleichen, zur Gasführung ausgebildet sein. Das Anbauteil 31 ist mit dem Innenrohr 10 und dem Außenrohr 14 zweckmäßigerweise fest verbunden. Hierdurch wird die Stabilität der Düse 1 im Bereich des Düsenmundstücks 2 erhöht. Zudem wird durch den Einbau eines Anbauteils 31 in Form von Drallkörpern, Drallblechen oder dergleichen die Strömungsführung des Gases, insbesondere der Zerstäuberluft, am Düsenmundstück 2, insbesondere im Austrittsbereich der Düse 1 beeinflusst. Hierdurch kann das Strömungsverhalten an der Außenrohr-Austrittsöffnung 13 des durch den Ringspalt 16 strömenden Gases verändert und exakt eingestellt werden, um das Spraybild der Düse 1 für den Herstellungs- und/oder Sprühprozess zu verbessern. Zusätzlich sind hierdurch die Sprühsymmetrie und die Tröpfchengröße des Sprays, d.h. des zu versprühenden Stoffs, bevorzugt einer Flüssigkeit, ganz besonders bevorzugt einer Dispersion, Emulsion oder Suspension, direkt einstellbar.

Des Weiteren wird das Innenrohr 10 beim Einbau im Außenrohr 14 geführt und stets in der gewünschten Position, in Fig. 6 in einer konzentrischen Position um die Längsachse X-X, gehalten. Zudem verhindert das Anbauteil 31 ein Schwingen des Innenrohrs 10, was zu einer Veränderung sowohl der Innenrohr-Austrittsöffnung 9 als auch der Außenrohr-Austrittsöffnung 13 führt, was die Strömungsverhältnisse am Düsenmundstück 2, insbesondere im Austrittsbereich der Düse 1 ändert und somit auch die Spraysymmetrie und die Tröpfchengröße des Sprays beeinflusst.

Fig. 7 stellt eine Schnittdarstellung einer vierten Ausführungsform einer bevorzugten Düse 1 mit mehreren im Bereich der Engstelle 18 angeordneten Fluidkammern 30 dar, wobei die Engstelle 18 in einer Offen-Stellung ausgebildet ist.

Auch die bevorzugte Düse 1 gemäß der vierten Ausführungsform entspricht in ihrem grundlegenden Aufbau der in den Fign. 3 bis 5 gezeigten zweiten Ausführungsform der bevorzugten Düse 1. Der Unterschied zwischen den beiden Ausführungsformen ist, dass die bevorzugte Düse 1 der vierten Ausführungsform im Gegensatz zur Düse 1 der zweiten Ausführungsform mehrere, nämlich drei, Kammervolumina 29a, 29b, 29c der Fluidkammern 30a, 30b, 30c aufweist, die durch Fluidaufnahme oder Fluidabgabe stufenlos veränderbar sind. In anderen nicht dargestellten Ausführungsformen ist auch eine andere Anzahl an Fluidkammern 30 realisiert, bspw. zwei, vier, fünf, sechs usw..

Zweckmäßigerweise sind die Kammervolumina 29a, 29b, 29c der Fluidkammern 30a, 30b, 30c durch Fluidaufnahme oder Fluidabgabe unabhängig voneinander einstellbar und/oder veränderbar.

Durch die stufenlose Einstellbarkeit der Kammervolumina 29a bis 29c der Fluidkammern 30a bis 30c ist es möglich den Volumenstrom des zu versprühenden Stoffs und des den zu versprühenden Stoff zerstäubenden Gases genau und gezielt einzustellen, sodass die Symmetrie und die Tröpfchengröße des Sprays optimal für den jeweiligen Prozess, insbesondere einen Coatingprozess von Partikeln, vorzugsweise Tabletten, einstellbar ist. Durch die unabhängige Einstellbarkeit der Kammervolumina 29a, 29b, 29c ist ebenfalls eine optimale Anpassung des Volumenstroms des zu versprühenden Stoffs auf das Zerstäubergas und umgekehrt möglich. Hierdurch kann auch auf die kleinsten Veränderungen in der Symmetrie oder Tröpfchengröße im Spray reagiert werden.

In anderen nicht gezeigten Ausführungsformen besteht überdies die Möglichkeit die mehreren Fluidkammern 30 so anzusteuern, dass entweder der Innenrohrkanal 7 des Innenrohrs 10 oder das Außenrohr 14 unabhängig voneinander freigebbar und verschließbar sind.

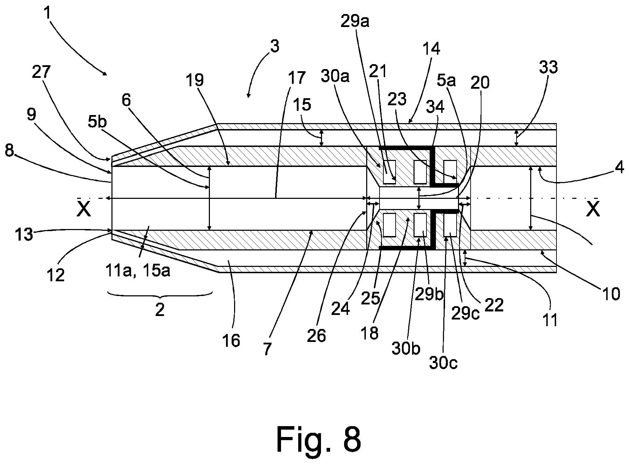

Fig. 8 zeigt eine Schnittdarstellung einer fünften Ausführungsform einer bevorzugten Düse 1 mit mehreren im Bereich der Engstelle 18 angeordneten Fluidkammern 29a bis 29c, wobei die Engstelle 18 in einer Offen-Stellung ausgebildet ist und die Fluidkammern 30a bis 30c entweder eine Innenrohrkanal-Querschnittsfläche 5a oder eine Außenrohrkanal-Querschnittsfläche 33 einstellen. In der Außenführungsform entspricht die Außenrohrkanal-Querschnittsfläche 33 einer Ringspaltfläche.

Hierzu weist die Düse 1 nach der fünften Ausführungsform in und/oder an dem flexiblen Material 28 mehrere ein Kammervolumen 29a bis 29c aufweisende Fluidkammern 30a bi 30c angeordnet. Die Fluidkammern 30a bis 30c sind zur Fluidaufnahme oder Fluidabgabe geeignet. Hierdurch ist in der Engstelle 18 die Innenrohrkanal-Querschnittsfläche 5a und/oder im Außenrohr 14 eine Außenrohr-Querschnittsfläche 33 einstellbar. Um einen Einfluss der Fluidkammern 30a bis 30c untereinander zu verhindern sind Fluidkammerbegrenzungseinrichtungen 34 zwischen den Fluidkammern 30a bi 30c verbaut, hier zwischen den die Engstelle 18 und somit die Innenrohrkanal-Querschnittsfläche 5a einstellenden Fluidkammern 29a und 29b und der die Au-βenrohrkanal-Querschnittsfläche 33 einstellende Fluidkammer 29c.

Bei einer Fluidzufuhr zu den Kammervolumina 29a und 29b vergrößern sich die Fluidkammern 29a und 29b und begrenzen den Durchfluss des zu versprühenden Stoffs durch die Engstelle 18, indem die Innenrohrkanal-Querschnittsfläche 5a verkleinert wird. Die Außenrohrkanal-Querschnittsfläche 33 bleibt davon unbeeinflusst.

Auch der umgekehrte Fall ist möglich: Bei einer Fluidzufuhr zu dem Kammervolumen 29c vergrößert sich die Fluidkammer 29c und begrenzt den Durchfluss des Gases, indem die Außenrohrkanal-Querschnittsfläche 33 verkleinert wird. Die Innenrohrkanal-Querschnittsfläche 5a bleibt davon unbeeinflusst.

Außerdem besteht die Möglichkeit durch Ansteuerung der Fluidvolumina 29a bis 29c die Fluidkammern 30a bis 30c unabhängig voneinander zu füllen, sodass Innenrohrkanal-Querschnittsfläche 5a und/oder Außenrohrkanal-Querschnittsfläche 33 unabhängig voneinander einstellbar sind. Diesbezüglich bevorzugt sind die mehreren Fluidkammern so ansteuerbar, dass der Innenrohrkanal 7 des Innenrohrs 10 oder das Außenrohr 14 unabhängig voneinander freigebbar und verschließbar sind. Die unabhängig voneinander einstellbare Innenrohrkanal-Querschnittsfläche a und/oder Außenrohrkanal-Querschnittsfläche 33 bieten den Vorteil, die Volumenströme von dem zu versprühenden Stoff unabhängig von dem Gas, insbesondere einem Zerstäubergas, wie Luft, einzustellen und somit auf die sich während des Prozesses ändernden Prozessbedingungen individuell reagieren zu können.

## Patentansprüche

1. Düse (1) zum Versprühen von Stoffen, insbesondere Dispersionen, Emulsionen oder Suspensionen, umfassend einen ein Düsenmundstück (2) und eine Längsachse (X-X) aufweisenden Düsenkörper (3), wobei der Düsenkörper (3) ein mit einer Zuführung für den zu versprühenden Stoff verbundenes, über einen eine Innenrohrkanal-Innenwandung (4), einen eine Innenrohrkanal-Querschnittsfläche (5) aufweisenden Innenrohrkanal-Querschnitt (6) umfassenden Innenrohrkanal (7) und eine eine Innenrohr-Austrittsöffnungsfläche (8) aufweisende Innenrohr-Austrittsöffnung (9) verfügendes Innenrohr (10) und ein das Innenrohr (10) mit radialem Abstand (11) umschließendes und mit einer Zuführung für ein Gas verbundenes eine eine Außenrohr-Austrittsöffnungsfläche (12) aufweisende Außenrohr-Austrittsöffnung (13) umfassendes Außenrohr (14) aufweist und die Innenrohr-Austrittsöffnung (9) und die Außenrohr-Austrittsöffnung (13) im Bereich des Düsenmundstückes (2) angeordnet sind, wobei in dem den zu versprühenden Stoff führenden Innenrohrkanal (7) in einem Abstand (17) zur Innenrohr-Austrittsöffnung (9) eine Engstelle (18) angeordnet ist, wobei in der Engstelle (18) die Innenrohrkanal-Querschnittsfläche (5a) kleiner ist als die Innenrohrkanal-Querschnittsfläche (5b) eines Innenrohrkanalaustrittsabschnitts (19) zwischen der Engstelle (18) und der Innenrohr-Austrittsöffnung (9), **dadurch gekennzeichnet, dass** die Engstelle (18) aus einem flexiblen Material (28) ausgebildet ist.

2. Düse (1) nach Anspruch 1, **dadurch gekennzeichnet, dass** die Engstelle (18) als ein eine Innenrohrkanalabschnittslänge (20) aufweisender Innenrohrkanalabschnitt (21) ausgebildet ist.

3. Düse (1) nach Anspruch 2, **dadurch gekennzeichnet, dass** der Innenrohrkanalabschnitt (21) über der Innenrohrkanalabschnittslänge (20) eine konstante Innenrohrkanal-Querschnittsfläche (5a) oder in Strömungsrichtung des zu versprühenden Stoffs eine kleiner werdende Innenrohrkanal-Querschnittfläche (5a) aufweist.

4. Düse (1) nach einem der vorhergehenden Ansprüche, **dadurch gekennzeichnet, dass** die Engstelle (18) eine Engstellen-Austrittsöffnung (26) aufweist, wobei sich die Innenrohrkanal-Querschnittsfläche (5) über einer Engstellenauslaufstrecke (25) in Strömungsrichtung des zu versprühenden Stoffes aufweitet.

5. Düse (1) nach einem der vorhergehenden Ansprüche, **dadurch gekennzeichnet, dass** das Innenrohr (10) und das Außenrohr (14) koaxial um eine Längsachse (X-X) angeordnet sind und/oder das Innenrohr (10) und das Außenrohr (14) dergestalt zueinander angeordnet sind, dass die Innenrohr-Austrittsöffnung (9) konzentrisch zu der Außenrohr-Austrittsöffnung (13) angeordnet ist.

6. Düse (1) nach einem der vorhergehenden Ansprüche, **dadurch gekennzeichnet, dass** im Bereich des Düsenmundstückes (2) im zwischen dem Innenrohr (10) und dem Außenrohrs (14) ein Anbauteil (31) in Form von Drallkörpern, Drallblechen oder dergleichen zur Gasführung angeordnet ist, wobei zweckmäßigerweise das Anbauteil (31) im Außenrohr (14) zur Führung des Innenrohrs (10) angeordnet ist.

7. Düse nach einem der vorhergehenden Ansprüche, **dadurch gekennzeichnet, dass** das flexible Material (28) ein Polymer, bevorzugt ein synthetisches Polymer, insbesondere ein Silikon ist.

8. Düse (1) nach einem der vorhergehenden Ansprüche, **dadurch gekennzeichnet, dass** in und/oder an dem flexiblen Material (18) eine ein Kammervolumen (29) aufweisende Fluidkammer (30) angeordnet ist, die zur Fluidaufnahme oder Fluidabgabe geeignet ist, sodass in der Engstelle (18) die Innenrohrkanal-Querschnittsfläche (5a) einstellbar ist.

9. Düse (1) nach Anspruch 8, **dadurch gekennzeichnet, dass** in und/oder an dem flexiblen Material (18) mehrere ein Kammervolumen (29) aufweisende Fluidkammern (30) angeordnet sind, die zur Fluidaufnahme oder Fluidabgabe geeignet sind, sodass in der Engstelle (18) die Innenrohrkanal-Querschnittsfläche (5a) und/oder eine Außenrohrkanal-Querschnittsfläche (33) im Außenrohr (14) einstellbar ist.

10. Düse (1) nach einem der vorhergehenden Ansprüche, **dadurch gekennzeichnet, dass** das Innenrohr (10) mehrteilig ausgebildet ist.

11. Verfahren zur Steuerung oder Regelung des Volumenstroms eines zu versprühenden Stoffes und/oder eines Gases einer zum Versprühen von Stoffen, insbesondere Dispersionen, Emulsionen oder Suspensionen, geeigneten Düse (1), wobei die Düse (1) einen ein Düsenmundstück (2) und eine Längsachse (X-X) aufweisenden Düsenkörper (3) umfasst, wobei der Düsenkörper (3) ein mit einer Zuführung für den zu versprühenden Stoff verbundenes, über einen eine Innenrohrkanal-Innenwandung (4), einen eine Innenrohrkanal-Querschnittsfläche (5) aufweisenden Innenrohrkanal-Querschnitt (6) umfassenden Innenrohrkanal (7) und eine eine Innenrohr-Austrittsöffnungsfläche (8) aufweisende Innenrohr-Austrittsöffnung (9) verfügendes Innenrohr (10) und ein das Innenrohr (10) mit radialem Abstand (11) umschließendes und mit einer Zuführung für ein Gas verbundenes eine eine Außenrohr-Austrittsöffnungsfläche (12) aufweisende Außenrohr-Austrittsöffnung (13) umfassendes Außenrohr (14) aufweist und die Innenrohr-Austrittsöffnung (9) und die Außenrohr-Austrittsöffnung (13) im Bereich des Düsenmundstückes (2) angeordnet sind, **dadurch gekennzeichnet, dass** in dem den zu versprühenden Stoff führenden Innenrohrkanal (7) in einem Abstand (17) zur Innenrohr-Austrittsöffnung (9) eine Engstelle (18) angeordnet ist, wobei in der Engstelle (18) die Innenrohrkanal-Querschnittsfläche (5a) kleiner ist als die Innenrohrkanal-Querschnittsfläche (5b) eines Innenrohrkanalaustrittsabschnitts (19) zwischen der Engstelle (18) und der Innenrohr-Austrittsöffnung (9) und die Engstelle (18) aus einem flexiblen Material (28) ausgebildet ist, wobei die Engstelle (18) eine Schließ-Stellung zum Verschließen des Innenrohrkanals (7) und zumindest eine Offen-Stellung aufweist, wobei in der zumindest einen Offen-Stellung zumindest der Innenrohrkanal (7) für den zu versprühenden Stoff durchströmbar ist, wobei in und/oder an dem flexiblen Material (28) eine ein Kammervolumen (29) aufweisende Fluidkammer (30) angeordnet ist, die zur Fluidaufnahme oder Fluidabgabe geeignet ist, sodass in der Engstelle (18) die Innenrohrkanal-Querschnittsfläche (5a) einstellbar ist, wodurch die Düse (1) von der einen Schließ-Stellung des Innenrohrkanals (7) in die zumindest eine Offen-Stellung des Innenrohrkanals (7) verbringbar ist oder verbracht wird und umgekehrt.

12. Verfahren nach Anspruch 11, **dadurch gekennzeichnet, dass** beim Verbringen der Engstelle (18) von der einen Schließ-Stellung des Innenrohrkanals (7) in die zumindest eine Offen-Stellung des Innenrohrkanals (7) das durch das Außenrohr (14) strömende Gas vor dem Verbringen der Engstelle (18) von der einen Schließ-Stellung des Innenrohrkanals (7) in die zumindest eine Offen-Stellung des Innenrohrkanals (7) durch das Außenrohr (14) oder zumindest zeitgleich mit dem Verbringen der Engstelle (18) von der einen Schließ-Stellung des Innenrohrkanals (7) in die zumindest eine Offen-Stellung des Innenrohrkanals (7) durch das Außenrohr (14) zu strömen beginnt.

13. Verfahren nach Anspruch 11 oder 12, **dadurch gekennzeichnet, dass** beim Verbringen der Engstelle (18) von der zumindest eine Offen-Stellung des Innenrohrkanals (7) in die eine Schließ-Stellung des Innenrohrkanals (7) das durch das Außenrohr (14) strömende Gas frühestens zeitgleich mit dem Verbringen der Engstelle (18) von der zumindest eine Offen-Stellung des Innenrohrkanals (7) in die eine Schließ-Stellung des Innenrohrkanals (7) durch das Außenrohr (14) oder nach dem Verbringen der Engstelle (18) von der zumindest eine Offen-Stellung des Innenrohrkanals (7) in die eine Schließ-Stellung des Innenrohrkanals (7) durch das Außenrohr (14) zu strömen stoppt.

14. Verfahren nach einem der Ansprüche 11 bis 13, **dadurch gekennzeichnet, dass** das Kammervolumen (29) der Fluidkammer (30) durch Fluidaufnahme oder Fluidabgabe stufenlos veränderbar ist oder verändert wird oder die Kammervolumina (29) der Fluidkammern (30) durch Fluidaufnahme oder Fluidabgabe stufenlos veränderbar sind oder verändert werden, wobei zweckmäßigerweise die Kammervolumina (29) der Fluidkammern (30) durch Fluidaufnahme oder Fluidabgabe unabhängig voneinander veränderbar sind oder verändert werden.

15. Verfahren nach Anspruch 14, **dadurch gekennzeichnet, dass** die mehreren Fluidkammern (30) so ansteuerbar sind, dass der Innenrohrkanal (7) des Innenrohrs (10) oder das Außenrohr (14) unabhängig voneinander freigebbar und verschließbar sind.

## Claims

1. Nozzle (1) for spraying substances, in particular dispersions, emulsions or suspensions, the nozzle comprising a nozzle body (3) having a nozzle tip (2) and a longitudinal axis (X-X), wherein the nozzle body (3) has an inner tube (10) connected to a feed for the substance to be sprayed and equipped with an inner tube channel (7) comprising an inner tube channel inner wall (4) and an inner tube channel cross-section (6) having an inner tube channel cross-sectional area (5), and with an inner tube discharge opening (9) having an inner tube discharge opening area (8), and an outer tube (14) enclosing the inner tube (10) at a radial distance (11) and connected to a feed for a gas, comprising an outer tube discharge opening (13) having an outer tube discharge opening area (12), and wherein the inner tube discharge opening (9) and the outer tube discharge opening (13) are located in the region of the nozzle tip (2), wherein a constriction (18) is provided in the inner tube channel (7) carrying the substance to be sprayed at a distance from the inner tube discharge opening (9), wherein the inner tube channel cross-sectional area (5a) is smaller in the constriction (18) than the inner tube channel cross-sectional area (5b) of an inner tube channel discharge section (19) between the constriction (18) and the inner tube discharge opening (9) **characterised in that** the constriction (18) is formed from a flexible material (28) .

2. Nozzle (1) according to claim 1, **characterised in that** the constriction (18) is designed as an inner tube channel section (21) having an inner tube channel section length (20) .

3. Nozzle (1) according to claim 2, **characterised in that** the inner tube channel section (21) has a constant inner tube channel cross-sectional area (5a) along the inner tube channel section length (20) or the inner tube channel section (21) has an inner tube channel cross-sectional area (5a) which decreases in the flow direction of the substance to be sprayed.

4. Nozzle (1) according to any of the preceding claims, **characterised in that** the constriction (18) has a constriction discharge opening (26), wherein the inner tube channel cross-sectional area (5) widens in the flow direction of the substance to be sprayed along a constriction flowing-out length (25).

5. Nozzle (1) according to any of the preceding claims, **characterised in that** the inner tube (10) and the outer tube (14) are arranged coaxially around a longitudinal axis (X-X) and/or the inner tube (10) and the outer tube (14) are arranged relative to one another in such a way that the inner tube discharge opening (9) is concentric with the outer tube discharge opening (13).

6. Nozzle (1) according to any of the preceding claims, **characterised in that** an add-on part (31) in the form of swirl bodies, swirl plates or the like for gas guidance is located in the region of the nozzle tip (2) between the inner tube (10) and the outer tube (14), wherein expediently the add-on part (31) is located in the outer tube (14) for the guidance of the inner tube (10),

7. Nozzle (1) according to any of the preceding claims, **characterised in that** the flexible material (28) is a polymer, preferably a synthetic polymer, in particular a silicone.

8. Nozzle (1) according to any of the preceding claims, **characterised in that** a fluid chamber (30) having a chamber volume (29) and suitable for receiving and discharging fluid is provided in and/or at the flexible material (18), so that the inner tube channel cross-sectional area (5a) can be adjusted in the constriction (18).

9. Nozzle (1) according to claim 8, **characterised in that** several fluid chambers (30) having a chamber volume (29) and suitable for receiving and discharging fluid are provided in and/or at the flexible material (18), so that the inner tube channel cross-sectional area (5a) can be adjusted in the constriction (18) and/or an outer tube channel cross-sectional area (33) can be adjusted in the outer tube (14).

10. Nozzle (1) according to any of the preceding claims, **characterised in that** the inner tube (10) is of a multi-part design.

11. Method for the open-loop or closed-loop control of the volumetric flow rate of a substance to be sprayed and/or of a gas of a nozzle (1) suitable for spraying substances, in particular dispersions, emulsions or suspensions, wherein the nozzle (1) comprises a nozzle body (3) having a nozzle tip (2) and a longitudinal axis (X-X), wherein the nozzle body (3) has an inner tube (10) connected to a feed for the substance to be sprayed and equipped with an inner tube channel (7) comprising an inner tube channel inner wall (4) and an inner tube channel cross-section (6) having an inner tube channel cross-sectional area (5), and with an inner tube discharge opening (9) having an inner tube discharge opening area (8), and an outer tube (14) enclosing the inner tube (10) at a radial distance and connected to a feed for a gas, comprising an outer tube discharge opening (13) having an outer tube discharge opening area (12), and wherein the inner tube discharge opening (9) and the outer tube discharge opening (13) are located in the region of the nozzle tip (2), **characterised in that** a constriction (18) is provided in the inner tube channel (7) carrying the substance to be sprayed at a distance from the inner tube discharge opening (9), wherein the inner tube channel cross-sectional area (5a) is smaller in the constriction (18) than the inner tube channel cross-sectional area (5b) of an inner tube channel discharge section (19) between the constriction (18) and the inner tube discharge opening (9) and wherein the constriction (18) is formed from a flexible material (28), wherein the constriction (18) has a closed position for closing the inner tube channel (7) and at least one open position, wherein the substance to be sprayed can flow at least through the inner tube channel (7) in the at least one open position, wherein a fluid chamber (30) having a chamber volume (29) and suitable for receiving and discharging fluid is provided in and/or at the flexible material (28), so that the inner tube channel cross-sectional area (5a) can be adjusted in the constriction (18), whereby the nozzle (1) can be or is transferred from the one closed position of the inner tube channel (7) into the at least one open position of the inner tube channel (7) and vice versa.

12. Method according to claim 11, **characterised in that**, when the constriction (18) is transferred from the one closed position of the inner tube channel (7) into the at least one open position of the inner tube channel (7), the gas flowing though the other tube (14) starts to flow through the outer tube (14) at least at the same time as the constriction (18) is transferred from the one closed position of the inner tube channel (7) into the at least one open position of the inner tube channel (7).

13. Method according to any of claims 11 or 12, **characterised in that**, when the constriction (18) is transferred from the at least one open position of the inner tube channel (7) into the one closed position of the inner tube channel (7), the gas flowing through the outer tube (14) ceases to flow through the outer tube (14) at the earliest at the same time as the constriction (18) is transferred from the at least one open position of the inner tube channel (7) into the one closed position of the inner tube channel (7).

14. Method according to any of claims 11 to 13, **characterised in that** the chamber volume (29) of the fluid chamber (30) can be or is changed continuously by receiving or discharging fluid, or the chamber volumes (29) of the fluid chambers (30) can be or are changed continuously by receiving fluid or discharging fluid, wherein expediently the chamber volumes (29) of the fluid chambers (30) can be or are changed independently of one another by receiving fluid or discharging fluid.

15. Method according to claim 14, **characterised in that** the several fluid chambers (30) are selectable in such a way that the inner tube channel (7) of the inner tube (10) or the outer tube (14) can be opened up or closed independently of each other.

## Revendications

1. Buse (1) pour la pulvérisation de substances, en particulier de dispersions, d'émulsions ou de suspensions, comprenant un corps de buse (3) présentant un embout de buse (2) et un axe longitudinal (X-X), dans laquelle le corps de buse (3) présente un tube intérieur (10) relié à une alimentation pour la substance à pulvériser, disposant d'un canal de tube intérieur (7) comprenant une paroi intérieure de canal de tube intérieur (4), une section transversale de canal de tube intérieur (6) présentant une aire de section de canal de tube intérieur (5) et une ouverture de sortie de tube intérieur (9) présentant une surface d'ouverture de sortie de tube intérieur (8) et un tube extérieur (14) entourant le tube intérieur (10) à distance radiale (11) et relié à une alimentation pour un gaz, comprenant une ouverture de sortie de tube extérieur (13) présentant une surface d'ouverture de sortie de tube extérieur (12), et l'ouverture de sortie de tube intérieur (9) et l'ouverture de sortie de tube extérieur (13) sont agencées dans la zone de l'embout de buse (2), dans laquelle un étranglement (18) est agencé dans le canal de tube intérieur (7) acheminant la substance à pulvériser à une distance (17) par rapport à l'ouverture de sortie de tube intérieur (9), dans lequel dans l'étranglement (18), l'aire de section de canal de tube intérieur (5a) est inférieure à l'aire de section de canal de tube intérieur (5b) d'une section de sortie de canal de tube intérieur (19) entre l'étranglement (18) et l'ouverture de sortie de tube intérieur (9), **caractérisée en ce que** l'étranglement (18) est réalisé en un matériau flexible (28).

2. Buse (1) selon la revendication 1, **caractérisée en ce que** l'étranglement (18) est réalisé en tant que section de canal de tube intérieur (21) présentant une longueur de section de canal de tube intérieur (20).

3. Buse (1) selon la revendication 2, **caractérisée en ce que** la section de canal de tube intérieur (21) présente sur la longueur de section de canal de tube intérieur (20) une aire de section de canal de tube intérieur (5a) constante ou dans le sens d'écoulement de la substance à pulvériser une aire de section de canal de tube intérieur (5a) diminuant.

4. Buse (1) selon l'une quelconque des revendications précédentes, **caractérisée en ce que** l'étranglement (18) présente une ouverture de sortie d'étranglement (26), dans laquelle l'aire de section de canal de tube intérieur (5) s'élargit sur une voie de sortie d'étranglement (25) dans le sens d'écoulement de la substance à pulvériser.

5. Buse (1) selon l'une quelconque des revendications précédentes, **caractérisée en ce que** le tube intérieur (10) et le tube extérieur (14) sont agencés coaxialement autour d'un axe longitudinal (X-X) et/ou le tube intérieur (10) et le tube extérieur (14) sont agencés de telle manière l'un par rapport à l'autre que l'ouverture de sortie de tube intérieur (9) soit agencée de manière concentrique à l'ouverture de sortie de tube extérieur (13).

6. Buse (1) selon l'une quelconque des revendications précédentes, **caractérisée en ce qu'**une pièce de montage (31) sous la forme de corps de tourbillon, tôles de tourbillon ou similaires pour le guidage de gaz est agencée dans la zone de l'embout de buse (2) entre le tube intérieur (10) et le tube extérieur (14), dans laquelle la pièce de montage (31) est agencée de manière appropriée dans le tube extérieur (14) pour le guidage du tube intérieur (10).

7. Buse selon l'une quelconque des revendications précédentes, **caractérisée en ce que** le matériau flexible (28) est un polymère, de préférence un polymère synthétique, en particulier une silicone.

8. Buse (1) selon l'une quelconque des revendications précédentes, **caractérisée en ce qu'**une chambre de fluide (30) présentant un volume de chambre (29) est agencée dans et/ou au niveau du matériau flexible (18), laquelle est appropriée pour la réception de fluide ou la sortie de fluide de sorte que l'aire de section de canal de tube intérieur (5a) soit réglable dans l'étranglement (18).

9. Buse (1) selon la revendication 8, **caractérisée en ce que** plusieurs chambres de fluide (30) présentant un volume de chambre (29) sont agencées dans et/ou au niveau du matériau flexible (18), lesquelles sont appropriées pour la réception de fluide ou la sortie de fluide de sorte que l'aire de section de canal de tube intérieur (5a) et/ou une aire de section de canal de tube extérieur (33) dans le tube extérieur (14) soit réglable dans l'étranglement (18).

10. Buse (1) selon l'une quelconque des revendications précédentes, **caractérisée en ce que** le tube intérieur (10) est réalisé en plusieurs parties.

11. Procédé de commande ou de régulation du débit volumique d'une substance à pulvériser et/ou d'un gaz d'une buse (1) appropriée pour la pulvérisation de substances, en particulier de dispersions, d'émulsions ou de suspensions, dans lequel la buse (1) comprend un corps de buse (3) présentant un embout de buse (2) et un axe longitudinal (X-X), dans lequel le corps de buse (3) présente un tube intérieur (10) relié à une alimentation pour la substance à pulvériser, disposant d'un canal de tube intérieur (7) comprenant une paroi intérieure de canal de tube intérieur (4), une section transversale de canal de tube intérieur (6) présentant une aire de section de canal de tube intérieur (5) et une ouverture de sortie de tube intérieur (9) présentant une surface d'ouverture de sortie de tube intérieur (8) et un tube extérieur (14) entourant le tube intérieur (10) à distance radiale (11) et relié à une alimentation pour un gaz, comprenant une ouverture de sortie de tube extérieur (13) présentant une surface d'ouverture de sortie de tube extérieur (12) et l'ouverture de sortie de tube intérieur (9) et l'ouverture de sortie de tube extérieur (13) sont agencées dans la zone de l'embout de buse (2), **caractérisé en ce qu'**un étranglement (18) est agencé dans le canal de tube intérieur (7) acheminant la substance à pulvériser à une distance (17) par rapport à l'ouverture de sortie de tube intérieur (9), dans lequel dans l'étranglement (18), l'aire de section de canal de tube intérieur (5a) est inférieure à l'aire de section de canal de tube intérieur (5b) d'une section de sortie de canal de tube intérieur (19) entre l'étranglement (18) et l'ouverture de sortie de tube intérieur (9), et l'étranglement (18) est réalisé en un matériau flexible (28), dans lequel l'étranglement (18) présente une position de fermeture pour la fermeture du canal de tube intérieur (7) et au moins une position ouverte, dans lequel dans l'au moins une position ouverte, au moins le canal de tube intérieur (7) pour la substance à pulvériser peut être traversé, dans lequel une chambre de fluide (30) présentant un volume de chambre (29) est agencée dans et/ou au niveau du matériau flexible (28), laquelle est appropriée pour la réception de fluide ou la sortie de fluide de sorte que dans l'étranglement (18), l'aire de section de canal de tube intérieur (5a) soit réglable, par quoi la buse (1) peut être amenée ou est amenée de l'une position de fermeture du canal de tube intérieur (7) dans l'au moins une position ouverte du canal de tube intérieur (7) et inversement.

12. Procédé selon la revendication 11, **caractérisé en ce que** lors du passage de l'étranglement (18) de l'une position de fermeture du canal de tube intérieur (7) dans l'au moins une position ouverte du canal de tube intérieur (7), le gaz circulant par le tube extérieur (14) avant le passage de l'étranglement (18) de l'une position de fermeture du canal de tube intérieur (7) dans l'au moins une position ouverte du canal de tube intérieur (7) commence à circuler par le tube extérieur (14) ou au moins simultanément au passage de l'étranglement (18) de l'une position de fermeture du canal de tube intérieur (7) dans l'au moins une position ouverte du canal de tube intérieur (7) par le tube extérieur (14).

13. Procédé selon la revendication 11 ou 12, **caractérisé en ce que** lors du passage de l'étranglement (18) de l'au moins une position ouverte du canal de tube intérieur (7) dans l'une position de fermeture du canal de tube intérieur (7), le gaz circulant par le tube extérieur (14) arrête de circuler au plus tôt simultanément au passage de l'étranglement (18) de l'au moins une position ouverte du canal de tube intérieur (7) dans l'une position de fermeture du canal de tube intérieur (7) par le tube extérieur (14) ou après le passage de l'étranglement (18) de l'au moins une position ouverte du canal de tube intérieur (7) dans l'une position de fermeture du canal de tube intérieur (7) par le tube extérieur (14).

14. Procédé selon l'une quelconque des revendications 11 à 13, **caractérisé en ce que** le volume de chambre (29) de la chambre de fluide (30) est modifiable ou est modifié en continu par réception de fluide ou sortie de fluide ou les volumes de chambre (29) des chambres de fluide (30) sont modifiables ou sont modifiés en continu par réception de fluide ou sortie de fluide, dans lequel de manière appropriée, les volumes de chambre (29) des chambres de fluide (30) sont modifiables ou sont modifiés par réception de fluide ou sortie de fluide indépendamment les uns des autres.

15. Procédé selon la revendication 14, **caractérisé en ce que** les plusieurs chambres de fluide (30) peuvent être commandées de sorte que le canal de tube intérieur (7) du tube intérieur (10) ou le tube extérieur (14) soient libérables et refermables indépendamment l'un de l'autre.
